# EUROPÄISCHE PATENTSCHRIFT

(11) **EP 1 041 910 B1**
(45) Veröffentlichungstag und Bekanntmachung des Hinweises auf die Patenterteilung: **25.07.2001**
(21) Anmeldenummer: 98960980.5
(22) Anmeldetag: 28.12.1998
(51) Int. Cl.: A47J 31/06, A47J 31/40

(54) **AUTOMATISCHE TEEMASCHINE**
AUTOMATIC TEA-MAKING MACHINE
THEIERE AUTOMATIQUE

(30) Priorität: 30.12.1997 CH 298097
(43) Veröffentlichungstag der Anmeldung: 11.10.2000
(73) Patentinhaber: Niederberger, Anton, 6370 Oberdorf (CH)
(72) Erfinder: NIEDERBERGER, Anton, CH-6370 Oberdorf (CH); SCHELBERT, Roger, CH-6436 Muotathal (CH); IMFELD, Ernst, CH-6343 Risch (CH); SINGER, Guido, CH-6415 Arth (CH)
(74) Vertreter: Révy von Belvárd, Peter
(86) Internationale Anmeldenummer: CH9800556
(87) Internationale Veröffentlichungsnummer: WO9934716

(56) Entgegenhaltungen:
- WO-A-96/33643
- WO-A-97/22286
- DE-U- 29 619 678
- GB-A- 2 003 382
- US-A- 4 815 366
- US-A- 5 245 914

## Beschreibung

Die vorliegende Erfindung betrifft eine elektrisch betreibbare automatische Teemaschine mit Ständer, einem Kaltwasserbehälter und einer Teezubereitungskammer.

Eine einfache Teemaschine, bei der das Teewasser erhitzt, verdampft, kondensiert und das kondensierte Wasser von oben nach unten durch einen Teefilter geleitet wird, ist bereits bekannt. Durch die lange Kondensationszeit bedingt hat sich jedoch dieser maschinell betriebene Teekrug nicht durchgesetzt vgl US-A-4815366).

Die Erfindung stellt sich nun die Aufgabe, eine Teemaschine zu schaffen, mit welcher der Tee automatisch in kürzester Zeit nach jeder gewünschten Rezeptur immer wiederholbar aufbereitet werden kann. Weiter soll sie für jedes beliebige Heissgetränk verwendet werden können, bei dessen Zubereitung Aromastoffe extrahiert werden. Diese Aufgabe wird nun durch die elektrisch betreibbare automatische Teemaschine gelöst, welche die kennzeichnenden Merkmale des unabhängigen Patentanspruchs 1 aufweist. Vorteilhafte Ausführungsformen der Teemaschine enthalten die abhängigen Patentansprüche 2 bis 5.

Nachfolgend wird ein Ausführungsbeispiel der Erfindung anhand der Zeichnung näher erläutert. Es zeigen:

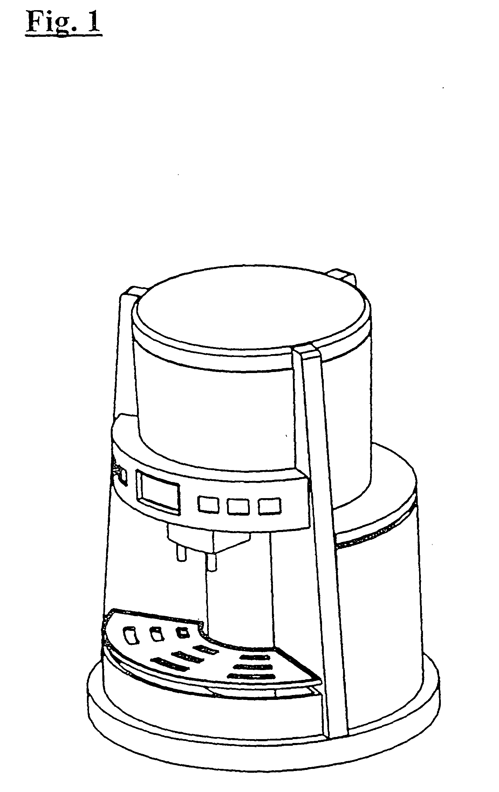

- Fig. 1: eine Teemaschine in schaubildlicher Darstellung
- Fig. 2: eine Teemaschine in schaubildlicher, auseinandergezogener Darstellung,
- Fig. 3: eine schematisch, geschnittene Darstellung der Teemaschine aus Fig. 1,
- Fig. 4: schematisch die Teezubereitungskammer mit Teesieb und dem Konzept der Wasserbewegung und
- Fig. 5: schematisch die Aufheizung des Wassers in der Heizkammer und der Teezubereitungskammer

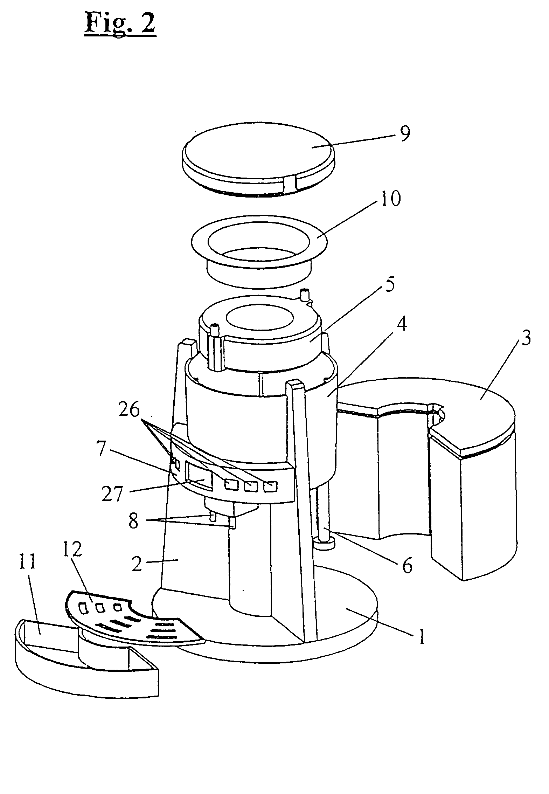

In Fig. 2 sind die von aussen sichtbaren Teile der Teemaschine dargestellt, nämlich Boden 1 mit Ständer 2, Kaltwasserbehälter 3, Teezubereitungskammer 4, Heizkammer 5, Wasseransaugrohr 6, Bedienungsfeld 7 mit dahinter befindlicher, elektronischer Steuereinheit, Teeausflussrohre 8 für zwei Gefässe, sowie Deckel 9 mit Deckeleinsatz 10 und Teeauffangbehälter 11 mit Abdeckung 12.

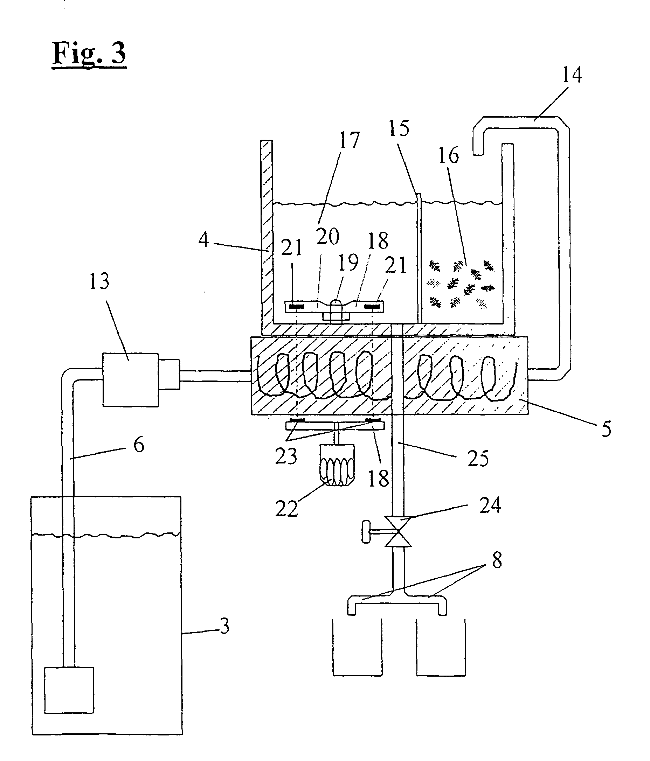

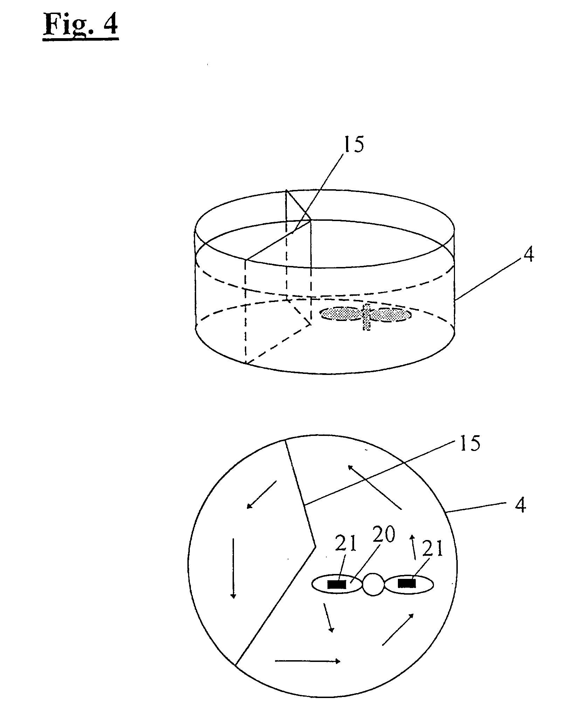

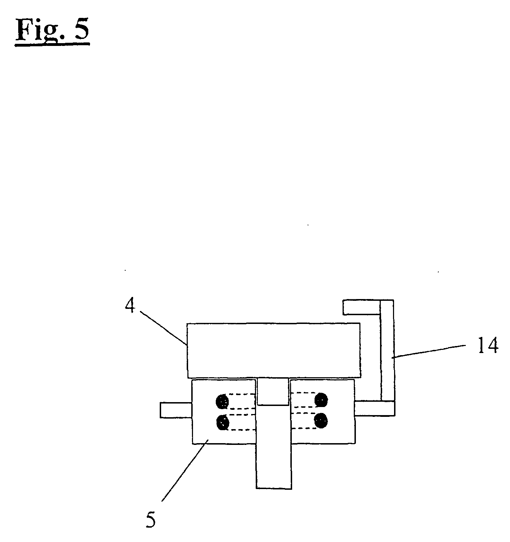

Gemäss Fig. 3 wird zur Teezubereitung das Wasser aus dem Kaltwasserbehälter 3 durch eine motorisch betriebene Pumpe 13 durch das Saugrohr 6 angesaugt und durch die elektrisch beheizte ringförmige Heizkammer 5 und weiter durch das Ausflussrohr 14 von oben in die Teezubereitungskammer 4 geführt, wobei das Wasser in der Heizkammer 5 im Durchlaufverfahren auf die gewünschte Temperatur erhitzt wird. In einem Teesieb 15, dessen Kreissegmentform in Fig. 4 ersichtlich ist, und welches in die Teezubereitungskammer 4 eingesetzt und zu Reinigungszwecken herausnehmbar ist, befindet sich die zu extrahierende Teesubstanz 16 in Blatt-, Pulver-, Korn- oder Beutelform, wobei sie von heissem Teewasser 17 bedeckt wird. Ausserhalb des Teesiebes 15 befindet sich ein Rührwerk 18, mit dem das Wasser 17 in wirbelförmige Bewegung versetzt wird, so dass es beständig über die Teesubstanz 16 stromt mit der Folge, dass die Extraktion der Teesubstanz in minimaler Zeit erfolgt. Das Rührwerk 18 besteht aus einem, auf einem Lagerdorn 19 aufgesetzten, zu Reinigungszwecken abnehmbaren Kunststoffpropeller 20, in welchem kleine Magnete 21 eingesetzt sind, wobei der Propeller durch unterhalb der Teezubereitungskammer von einem Motor 22 angetriebene Gegenmagnete 23 in Drehung versetzt wird. Während der Tee so zubereitet wird, wird das Teewasser 17 durch die unter der Teezubereitungskammer angeordnete Heizkammer 5 auf der gewünschten Temperatur gehalten (Fig. 5). Nach der eingestellten Extraktionszeit, öffnet sich ein Ventil 24 in der Abflussleitung 25, so dass der fertige Tee durch die Ausflussrohre 8 in die bereitgestellten Gefässe fliessen kann.

Die gesamte Teezubereitung wird durch eine hinter dem Bedienungsfeld 7 angeordnete, in der Zeichnung nicht sichtbaren elektronischen Steuereinheit automatisch geregelt. Dabei kann das Menü der Teezubereitung über Bedienungstasten 26 individuell eingegeben werden, so dass Menge, Temperatur und die Extraktionszeit je nach der gewünschten Teerezeptur gesteuert werden. Nach Wunsch kann das eingegebene Menu auch unter einem wählbaren Namen gespeichert und durch Tastendruck auf dem Anzeigefeld 27 sichtbar gemacht und in Gang gesetzt werden. Weitere Menüs für besondere Teearten können auch direkt gespeichert werden.

In einer Weiterentwicklung der Teemaschine können entsprechend der gespeicherten Menüs die verschiedenen Teearten in einem Revolverrring einzeln in das Teesieb 15 absenkbar und hebbar über der Teezubereitungskammer 4 angeordnet sein, so dass eine vollautomatische Teezubereitung ermöglicht wird.

## Patentansprüche

1. Elektrisch betreibbare automatische Teemaschine mit einem Ständer, einem Kaltwasserbehälter (3) und einer Teezubereitungskammer (4), wobei ein Saugrohr (6) mit dem Kaltwasserbehälter (3) und einer Pumpe (13) und weiter mit einer Heizkammer (5) verbunden ist, wobei ein von der Heizkammer (5) weiterführendes Ausflussrohr (14) mit seinem Ende über der Teezubereitungskammer (4) angeordnet ist, welche durch ein entfernbares Teesieb (15) kreissegmentförmig unterteilt ist und in welche ein entfembarer Propeller (20) eines Rührwerkes (18) eingesetzt ist, wobei eine elektronische Steuereinheit zur Steuerung sämtlicher Teezubereitungsvorgänge hinter einem Bedienungsfeld angeordnet ist.

2. Teemaschine nach Anspruch 1, dadurch gekennzeichnet, dass der Antrieb des Rührwerks (18) von einem Motor (22) getriebene Gegenmagnete (23) und in den Propeller (20) eingesetzte Magnete (21) aufweist.

3. Teemaschine nach Anspruch 1 oder 2, dadurch gekennzeichnet, dass sich die ringförmige Heizkammer (5) unter der Teezubereitungskammer (4) befindet, derart dass das Wasser im Durchlauferhitzungsverfahren auf die gewünschte Temperatur erhitzt und in der Teezubereitungskammer (4) auf der gewünschten Temperatur gehalten wird.

4. Teemaschine nach einem der vorhergehenden Ansprüche, dadurch gekennzeichnet, dass Daten, wie Menge, Temperatur und/oder Brühzeit, einer Teerezeptur mittels mit der Steuereinheit zusammenwirkenden Tasten (26) im Bedienungsfeld (7) eingebbar, speicherbar und abrufbar sind.

5. Teemaschine nach einem der vorhergehenden Ansprüche, dadurch gekennzeichnet, dass oberhalb der Teezubereitungskammer (4) ein drehbarer Ring mit einzeln eingesetzten verschiedenen Teesorten angeordnet ist.

## Revendications

1. Théière électrique automatique comportant un support, un récipient à eau froide (3) et une chambre de préparation du thé (4) , un tuyau d'aspiration (6) étant relié au récipient à eau froide (3) et à une pompe (13) ainsi qu'à une chambre de chauffage (5), un tube d'écoulement (14) sortant de la chambre de chauffage (5) étant disposé avec son extrémité au-dessus de la chambre de préparation du thé (4), laquelle est divisée en segments de cercle par une passoire à thé (15) amovible et une hélice amovible (20) d'un agitateur (18) étant placée dans celle-ci, une unité de commande électronique étant disposée derrière un panneau de commande pour la commande de tous les processus de préparation du thé.

2. Théière électrique suivant la revendication 1, caractérisée en ce que l'entraînement de l'agitateur (18) présente des contre-aimants (23) entraînés par un moteur (22) et des aimants (21) placés dans l'hélice (20).

3. Théière électrique suivant la revendication 1 ou 2, caractérisée en ce que la chambre de chauffage (5) annulaire se trouve en dessous de la chambre de préparation du thé (4), de telle manière que l'eau soit chauffée à la température voulue par un système de chauffe-eau instantané et soit maintenue à la température voulue dans la chambre de préparation du thé (4).

4. Théière électrique suivant l'une des revendications précédentes, caractérisée en ce que les données telles que la quantité, la température et/ou la durée d'infusion, qui peuvent être introduites dans une recette de thé à l'aide de touches (26) du panneau de commande (7) agissant sur l'unité de commande, peuvent être mémorisées et rappelées.

5. Théière électrique suivant l'une des revendications précédentes, caractérisée en ce qu'un anneau tournant dans lequel sont placées individuellement diverses sortes de thé se trouve au-dessus de la chambre de préparation du thé (4).

## Claims

1. An automatic, electrically operated tea-making machine with a stand, a cold-water container (3) and a tea-preparation chamber (4), in which case a suction pipe (6) is connected to the cold-water container (3) and to a pump (13) and also to a heating chamber (5), and an outlet pipe (14), following on from the heating chamber (5), is arranged so that its end is located above the tea-preparation chamber (4), which is divided into segments of a circle by a removable tea-strainer (15) and into which a removable propeller (20) of a stirring mechanism (18) is inserted, an electronic control unit for controlling all the tea-preparation processes being located behind a control panel.

2. A tea-making machine according to Claim 1, characterized in that the drive arrangement of the stirring mechanism (18) has magnets (23) which are driven by a motor (22) and cooperate with magnets (21) mounted in the propeller (20).

3. A tea-making machine according to Claim 1 or 2, characterized in that the circular heating chamber (5) is located underneath the tea-preparation chamber (4), in such a way that the water is heated to the desired temperature in an instantaneous heating process and is kept at the desired temperature in the tea-preparation chamber (4).

4. A tea-making machine according to one of the preceding claims, characterized in that data, such as quantity, temperature and/or brewing time, of a tea recipe can be entered, stored and retrieved by means of push-buttons (26) which are located on the control panel (7) and cooperate with the control unit.

5. A tea-making machine according to one of the preceding claims, characterized in that a revolving ring with different kinds of tea separately placed therein is located above the tea-preparation chamber (4).
